Europäisches Patentamt

(19) European Patent Office

Office européen des brevets

(11) Numéro de publication : **0 027 415**
**B1**

# (12) FASCICULE DE BREVET EUROPÉEN

(45) Date de publication du fascicule du brevet :
**11.05.83**

(51) Int. Cl.³ : **G 02 C   1/04**

(21) Numéro de dépôt : **80401446.2**

(22) Date de dépôt : **09.10.80**

(54) **Monture de lunettes.**

(30) Priorité : **16.10.79 FR 7925654**
**22.08.80 FR 8018335**

(43) Date de publication de la demande :
**22.04.81 Bulletin 81/16**

(45) Mention de la délivrance du brevet :
**11.05.83 Bulletin 83/19**

(84) Etats contractants désignés :
**AT BE CH DE FR GB IT LI NL SE**

(56) Documents cités :
**FR A 1 376 182**
**US A 2 851 925**

(73) Titulaire : **ESSILOR INTERNATIONAL Cie Générale
d'Optique
1 Rue Thomas Edison Echat 902
F-94028 Creteil Cedex (FR)**

(72) Inventeur : **Lhospice, Bernard
36 Avenue du Général Leclerc
F-41000 Blois (FR)**

(74) Mandataire : **CABINET BONNET-THIRION
95 Boulevard Beaumarchais
F-75003 Paris (FR)**

## Monture de lunettes

La présente invention concerne d'une manière générale les montures de lunettes du genre comportant une structure maîtresse et, portés par celle-ci, deux entourages ou cercles propres chacun à recevoir un verre de lunettes, et vise plus précisément celles de ces montures de lunettes dans lesquelles chacun desdits entourages comporte d'une part une galerie relativement rigide, qui s'étend sur une partie au moins de la périphérie du verre de lunettes concerné, et d'autre part un lien de cerclage relativement souple, qui assure le maintien de ce dernier.

De telles montures de lunettes se trouvent notamment décrites dans le brevet anglais N° 533.161, ainsi que dans le brevet français N° 1.094.381 et les diverses additions rattachées à celui-ci.

Elles ont pour avantage une grande légèreté, due à la participation d'un lien souple à la constitution de chaque cercle ou entourage, la section d'un tel lien souple pouvant avantageusement être relativement réduite.

Suivant les réalisations décrites dans le brevet anglais N° 533.161, ce lien souple est assujetti à demeure à la structure maîtresse à chacune de ses extrémités, ce qui rend difficile son remplacement en cas de rupture.

Par contre, dans les réalisations décrites dans le brevet français N° 1.094.381 et les additions rattachées à celui-ci, chaque lien de cerclage souple ne se trouve attelé que de manière détachable, par coincement, à la structure maîtresse, à chacune de ses extrémités, par passage dans deux trous liés à une telle structure maîtresse.

En pratique, les deux trous en question sont le plus souvent formés à l'extrémité correspondante de la galerie associée, la structure maîtresse se réduisant à une simple barre centrale sur laquelle une telle galerie est rapportée.

Cependant, dans l'addition N° 73 293 à ce brevet français N° 1.094.381 est décrite une réalisation suivant laquelle il est prévu une structure maîtresse qui s'étend sur toute la largeur de la monture de lunettes concernée, d'une des branches latérales de celle-ci à l'autre, les trous propres à la fixation des liens de cerclage souples étant directement formés sur cette structure maîtresse, cependant que, pour chaque cercle ou entourage, une galerie formant alors simplement enjoliveur, et s'étendant sur tout ou partie du contour d'un tel cercle ou entourage, est insérée par coincement, entre le verre de lunettes concerné et la structure maîtresse, aucun assujettissement particulier autre qu'un simple emboîtement n'étant prévu entre une telle galerie et cette structure maîtresse.

Quoi qu'il en soit, la mise en œuvre de liens souples pour le maintien des verres de lunettes impose en pratique le choix d'un matériau relativement rigide pour la constitution de la structure maîtresse et des galeries portées par celle-ci lorsque ces galeries sont assujetties à demeure à cette structure maîtresse, faute de quoi, par simple déformation de l'ensemble, les verres de lunettes peuvent venir fortuitement à échapper de manière intempestive à leurs cercles ou entourages.

C'est la raison pour laquelle, à ce jour, dans les montures de lunettes à liens de cerclage souples du genre concerné usuellement commercialisées, la structure maîtresse est métallique, ainsi que les galeries qu'elle porte.

Bien que cette disposition ait donné et donne encore satisfaction, il en résulte une certaine fixité dans la configuration d'ensemble possible pour les montures de lunettes concernées, qui ne permet pas de suivre avec souplesse les exigences de la mode en la matière.

En particulier, il n'est pas aisément possible à ce jour de tirer de manière économique, pour des montures de lunettes à liens de cerclage souples du genre concerné, tout le profit qu'offrent usuellement les matières synthétiques pour d'autres types de montures de lunettes, tant en ce qui concerne la décoration qu'en ce qui concerne la fabrication.

Certes, la réalisation à galeries formant enjoliveurs décrite dans l'addition N° 73 293 au brevet français N° 1.094.381 mentionné ci-dessus constitue déjà une approche dans l'obtention d'une monture de lunettes à liens de cerclage souples de nature combinée, c'est-à-dire associant la matière synthétique au métal, de telles galeries formant enjoliveurs pouvant aisément être réalisées en matière synthétique.

Mais, dans une telle réalisation, l'emploi de la matière synthétique ne peut qu'être limité, l'essentiel des montures de lunettes concernées demeurant en métal.

Certes également, il a été proposé des réalisations suivant lesquelles la structure maîtresse de montures de lunettes à liens de cerclage souples est en matière synthétique.

Mais, dans ces réalisations, outre que les liens de cerclage souples mis en œuvre sont de manière dispendieuse attelés à leurs extrémités à des cabestans pour en assurer la mise en traction, il est nécessaire en pratique, pour l'obtention de la rigidité indispensable, d'armer intérieurement de métal la structure maîtresse en matière synthétique, ce qui en alourdit considérablement les frais de fabrication, en faisant perdre tout le bénéfice de commodité de mise en œuvre par simple moulage usuellement attachée aux matières synthétiques.

En outre, dans de telles réalisations, aucune galerie spécifique n'est prévue, les verres de lunettes venant directement en prise avec la structure maîtresse, par engagement de leur tranche dans une rainure de celle-ci, ce qui limite en pratique l'usage des réalisations de ce type au seul port de verres de lunettes d'épaisseur constante, et donc au seul port de verres solaires.

La présente invention a d'une manière générale pour objet une disposition permettant au contraire, si désiré, une mise en œuvre économique et classique de matière synthétique pour la constitution de la structure maîtresse de montures de lunettes à liens de cerclage souples du genre concerné convenant à n'importe quel type de verre.

De manière plus précise, elle a pour objet une monture de lunettes du genre comportant une structure maîtresse et, portés par celle-ci, deux entourages ou cercles propres chacun à recevoir un verre de lunettes, chacun desdits entourages comportant d'une part une galerie propre à coopérer en emboîtement avec un verre de lunettes, et d'autre part un lien de cerclage souple propre à être attelé à la structure maîtresse à chacune de ses extrémités, par passage dans deux trous liés à celle-ci, cette monture de lunettes étant caractérisée en ce que, pour l'une au moins des extrémités du lien de cerclage souple quatre trous sont prévus en combinaison, deux formés de manière individuellement connue en soi sur la structure maîtresse, et deux formés également de manière individuellement connue en soi sur la galerie concernée, lesdits trous étant en correspondance deux à deux de ladite structure maîtresse à ladite galerie, en sorte que ledit lien de cerclage souple assujettit la galerie à la structure maîtresse.

Suivant une première forme de réalisation possible, il en est ainsi à chaque extrémité du lien de cerclage souple.

Suivant d'autres formes de réalisation, il n'en est ainsi qu'à l'une des extrémités du lien de cerclage souple, ce qui suffit en pratique à l'assujettissement recherché.

De préférence dans ce cas, il est prévu, à l'autre extrémité du lien de cerclage souple, une plaquette d'ancrage, qui est séparée de la galerie, et qui, traversée par le lien de cerclage souple, coopère avec la structure maîtresse pour la fixation de ladite autre extrémité du lien de cerclage souple.

En variante, trois trous sont prévus dans la structure maîtresse, pour passage en S du lien de cerclage souple.

Quoi qu'il en soit, dans tous les cas, chaque galerie est avantageusement assujettie de manière ferme à la structure maîtresse qui la porte, ce qui est garant de l'obtention de la rigidité requise pour un bon maintien en position du verre de lunettes concerné, et cet assujettissement d'une telle galerie à la structure maîtresse se fait avantageusement et économiquement par le lien de cerclage souple associé, ce lien de cerclage souple assurant ainsi par lui-même une double fonction, d'assujettissement de la galerie à la structure maîtresse, d'une part, et de cerclage du verre de lunettes concerné ou de la galerie, lorsque, de manière connue en soi, celle-ci double ce verre de lunettes tout autour de celui-ci, d'autre part.

De préférence, un tel assujettissement des galeries à la structure maîtresse par les liens de cerclage souples est assuré en atelier, en sorte que, lors de la pose des verres de lunettes, la manipulation de l'ensemble se trouve facilitée pour le praticien appelé à assurer une telle pose.

Par ailleurs, les galeries mises en œuvre suivant l'invention peuvent avantageusement, si désiré, être réalisées en métal, indépendamment de la structure maîtresse, ces galeries ne venant renforcer de l'extérieur cette structure maîtresse qu'après fabrication de celle-ci.

Ainsi, si désiré, une telle structure maîtresse peut avantageusement être intégralement réalisée en matière synthétique, par exemple par moulage, suivant les techniques usuelles en la matière, et avec toute la souplesse de configuration souhaitée.

En bref, la monture de lunettes suivant l'invention permet avantageusement dans ce cas, pour un prix d'ensemble relativement modéré, un compromis intéressant entre d'une part la souplesse générale autorisée par une réalisation en simple matière synthétique, non armée, de sa structure maîtresse, et d'autre part la rigidité, nécessaire à un bon maintien des verres de lunettes concernés, conférée localement à une telle structure en matière synthétique par les galeries en métal qui lui sont rapportées et assujetties, tout en restant légère dans son ensemble, et en autorisant une mise en place aisée et simple de verres de lunettes.

Enfin, par la mise en œuvre de galeries qu'elle implique, la monture de lunettes suivant l'invention convient aussi bien au port de verres solaires qu'au port de verres correctifs.

Les caractéristiques et avantages de l'invention ressortiront d'ailleurs de la description qui va suivre, à titre d'exemple, en référence aux dessins schématiques annexés sur lesquels :

la figure 1 est une vue partielle en perspective, partie éclatée, d'une monture de lunettes suivant l'invention, avec les verres destinés à son équipement ;

les figures 2, 3, 4 et 5 sont, à échelle supérieure, des vues partielles en coupe de cette monture de lunettes, suivant respectivement les lignes II-II, III-III, IV-IV et V-V de la figure 1, ladite monture étant supposée assemblée à la figure 5 ;

les figures 6 et 7 sont des vues analogues à celle de la figure 3 et concernent chacune respectivement une variante de réalisation ;

la figure 8 est une vue en perspective d'une variante de réalisation d'une galerie susceptible d'être mise en œuvre dans la monture de lunettes suivant l'invention ;

la figure 9 est une vue en perspective d'une autre variante de réalisation d'une telle galerie ;

la figure 10 est, à échelle supérieure, une vue transversale en coupe de cette galerie, suivant la ligne X-X de la figure 9 ;

la figure 11 est une vue analogue à celle de la figure 5, pour la galerie représentée isolément à la figure 9 ;

les figures 12 et 13 sont des vues analogues à celle de la figure 10 et concernent chacune respectivement une variante de réalisation ;

la figure 14 est une vue analogue à celle de la figure 1 et concerne une variante de réalisation ;

la figure 15 est, pour cette variante, une vue analogue à celle de la figure 5 ;

la figure 16 est une autre vue analogue à celle de la figure 5 et concerne une autre variante de réalisation ;

la figure 17 est une vue partielle en élévation de cette variante, suivant la flèche XVII de la figure 16 ;

la figure 18 est une vue en perspective de la plaquette d'ancrage mise en œuvre dans cette variante ;

les figures 19 et 20 sont des vues respectivement analogues à celles des figures 16 et 18 et concernent une autre variante de réalisation ;

la figure 21 est une vue analogue à celle de la figure 5, partie en élévation, partie en coupe, et concerne une autre variante de réalisation ;

la figure 22 est une vue partielle en coupe transversale de cette variante, suivant la ligne XXII-XXII de la figure 21 ;

la figure 23 est une autre vue analogue à celle de la figure 5 et concerne une autre variante de réalisation.

Tel qu'illustré par ces figures, une monture de lunettes suivant l'invention comporte d'une manière générale une structure maîtresse 10, et, portés par celle-ci, deux entourages ou cercles propres chacun à recevoir un verre de lunettes 11, chacun desdits entourages comportant d'une part une galerie 12, propre à coopérer en emboîtement avec un tel verre de lunettes 11, et d'autre part un lien de cerclage souple 13, propre à être attelé à la structure maîtresse 10 à chacune de ses extrémités, par passage dans deux trous 14 liés à celle-ci.

Dans l'exemple de réalisation représenté, la structure maîtresse 10 forme globalement deux anses 15, une pour chaque verre 11, reliées l'une à l'autre par un pontet médian 16, par exemple ajouré, tel que représenté.

C'est à chacune des extrémités de chacune des anses 15 que sont pratiqués les trous 14 prévus pour passage et fixation du lien de cerclage souple 13 correspondant, à la faveur d'un logement en retrait 17 dans l'exemple de réalisation représenté.

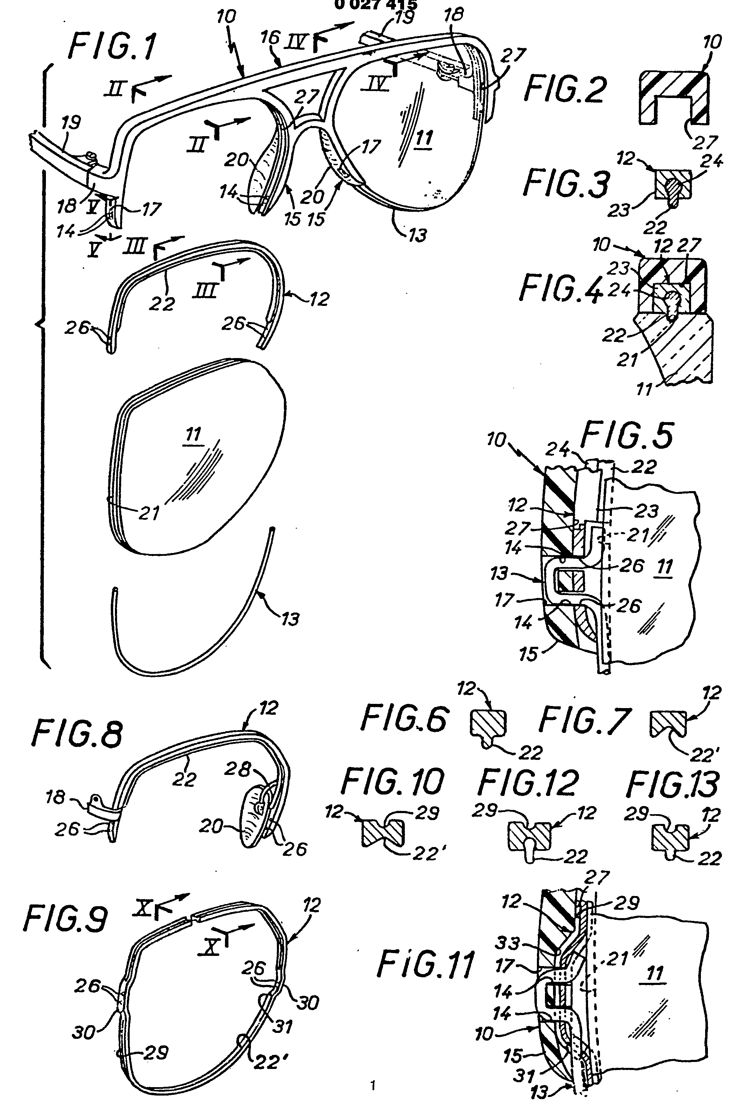

A ses extrémités latérales, du côté temporal de ces anses 15, la structure maîtresse 10 porte d'un seul tenant, en saillie vers l'arrière, dans l'exemple de réalisation représenté sur les figures 1 à 5, des tenons 18 propres à l'articulation, de manière connue en soi, de branches latérales de support 19.

Si désiré, une telle structure maîtresse 10 peut avantageusement être intégralement réalisée en matière synthétique, par exemple par moulage.

Dans ce cas, et tel que représenté à la figure 1, elle peut également porter d'un seul tenant, en saillie vers l'arrière, des plaquettes nasales 20, celles-ci faisant corps avec les anses 15, du côté nasal de ces anses.

Dans les formes de réalisation représentées sur les figures 1 à 8, chaque galerie 12 a globalement une configuration de cintre, suivant le contour des anses 15 de la structure maîtresse 10.

De manière connue en soi, une telle galerie 12 porte en saillie sur son contour interne, le long d'une partie au moins de celui-ci, un cordon 22, dont la partie d'extrémité au moins de la section transversale est à l'image de la demi-section transversale du lien de cerclage souple 13.

Ainsi, le verre 11 correspondant peut avantageusement être uniformément creusé à sa périphérie d'une gorge 21 propre tant à l'emboîtement d'un tel lien de cerclage souple 13, le long de la portion inférieure de cette périphérie, qu'à l'emboîtement du cordon 22, le long de la portion supérieure de celle-ci.

De manière connue en soi, et tel que représenté sur les figures 1 à 5, chaque galerie 12 peut être constituée de deux pièces, à savoir une gouttière en métal 23, d'une part, et une lamelle en matière synthétique 24 d'autre part, qui est insérée dans la gouttière 23, et dont la partie saillante forme le cordon 22.

En variante, figure 6, ce cordon 22 peut faire partie intégrante du reste de la galerie 12, l'ensemble étant d'un seul tenant en métal.

Quoi qu'il en soit, à l'une au moins des extrémités d'une galerie 12 sont pratiqués deux trous 26, en correspondance avec les trous 14 correspondants de la structure maîtresse 10, le cordon 22 étant interrompu en retrait vis-à-vis d'une telle extrémité.

Dans les exemples de réalisation illustrés par les figures 1 à 13, de tels trous 26 sont prévus à chacune des extrémités des galeries 12.

En outre, des moyens d'emboîtement sont prévus entre chaque galerie 12 et la structure maîtresse 10.

Dans les exemples de réalisation représentés sur les figures, ces moyens d'emboîtement comportent, pour chaque galerie 12, une rainure 27 pratiquée dans la structure maîtresse 10 et propre à un engagement au moins partiel d'une telle galerie 12.

Galerie 12 et rainure 27 de la structure maîtresse 10 ont des sections transversales complémentaires ; il s'agit par exemple, tel que représenté, d'une section rectangulaire.

En outre, dans les exemples de réalisation représentés sur les figures, transversalement, la profondeur d'une rainure 27 de la structure maîtresse 10 est au moins égale à la hauteur des galeries 12, en sorte que, transversalement, chacune de ces galeries 12 est recouverte en totalité par la structure maîtresse 10.

De surcroît, dans les formes de réalisation illustrées par les figures 1 à 8, pour lesquelles chaque galerie 12 n'a qu'une extension limitée, l'extension des anses 15 de la structure maîtresse 10 est au moins égale à celle d'une telle galerie, en sorte que, longitudinalement, chaque galerie 12 est également recouverte en totalité par la structure maîtresse 10.

Il en résulte que, une fois en place sur la structure maîtresse 10, chaque galerie 12 est totalement invisible de l'extérieur, pour autant que, bien entendu, cette structure maîtresse 10 ne soit pas transparente.

Cette mise en place des galeries 12 sur la structure maîtresse 10 se fait par simple emboîtement de ces galeries 12 dans les rainures 27 des anses 15 de cette structure maîtresse 10, les trous 26 d'une telle galerie 12 venant alors en correspondance avec ceux 14 des anses 15.

Cette mise en place se fait en pratique en atelier.

Quoi qu'il en soit, suivant l'invention, pour l'une au moins des extrémités d'un lien de cerclage souple 13, et pour chacune de ces extrémités dans les exemples de réalisation illustrés par les figures 1 à 13, quatre trous se trouvent ainsi prévus en combinaison, deux, 14, formés de manière individuellement connue en soi sur la structure maîtresse 10, et deux, 26, formés également de manière individuellement connue en soi sur la galerie 12 concerné, lesdits trous 14 et 26 étant en correspondance deux à deux de ladite structure maîtresse 10 à ladite galerie 12.

Dans les exemples de réalisations illustrés par les figures 1 à 13, chaque extrémité du lien de cerclage souple 13 se trouve donc passée d'abord dans un premier des trous 26 de la galerie 12, puis dans un premier des trous 14 de la structure maîtresse 10, puis, en sens contraire, dans le deuxième des trous de la structure maîtresse 10, et enfin, dans le deuxième des trous 26 de la galerie 12, avant son repli terminal.

Cet engagement d'une telle extrémité d'un lien de cerclage souple 13 dans de tels trous se fait suivant les modalités usuelles en la matière.

S'agissant de dispositions connues, celles-ci ne seront pas décrites en détail ici.

Il suffira de préciser que cet engagement peut être assuré en atelier, avant mise en place des verres 11, chaque lien de cerclage souple étant ensuite ramené par le praticien à une longueur adaptée au contour particulier de tels verres 11 lors de cette mise en place.

En variante, il peut être pratiqué par un tel praticien lors d'une telle mise en place.

Quoi qu'il en soit, et suivant l'invention, chaque lien de cerclage souple 13 assujettit à la structure maîtresse 10 la galerie 12 correspondante, à l'une au moins des extrémités de cette galerie 12, et en pratique à chacune de celles-ci dans les exemples de réalisation illustrés par les figures 1 à 13.

Suivant la forme de réalisation illustrée par la figure 7, chaque galerie 12, au lieu de présenter sur son contour interne un cordon saillant, a ce contour interne creusé d'un drageoir 22'.

Dans ce cas, la périphérie du verre 11 correspondant doit, pour sa portion supérieure, être biseautée, pour emboîtement dans la galerie 12 correspondante, et, pour sa portion inférieure, présenter une gorge 21, pour emboîtement du lien de cerclage souple 13.

Suivant la variante de réalisation illustrée par la figure 8, les plaquettes nasales 20, au lieu d'être portées par la structure maîtresse 10, sont portées par les galeries 12.

Dans ce cas, une telle plaquette nasale 20 est, de manière connue en soi, articulée en bout d'un bras 28 rapporté de manière convenable, par exemple par soudage, sur la galerie 12 correspondante.

De même, dans cette variante, chaque galerie 12 porte le tenon 18 associé, celui-ci lui étant par exemple rapporté par soudage ; en correspondance avec un tel tenon 18, la structure maîtresse concernée présente alors une encoche latérale en continuité avec la rainure, pour passage et emboîtement de ce tenon (non représenté sur les figures).

Dans ce qui précède, chaque galerie 12 n'a qu'une extension limitée.

En variante, figures 9 à 11, elle s'étend sensiblement en cercle, pour enserrer le verre 11 correspondant sur toute la périphérie de celui-ci.

Comme précédemment, elle peut être simplement engagée dans une rainure 27 de la structure maîtresse 10.

A sa périphérie externe, elle est adaptée à coopérer en emboîtement avec le lien de cerclage souple 13 associé.

A cet effet, elle présente, extérieurement, une gorge 29, figures 9 et 10, adaptée à la configuration d'un tel lien de cerclage souple.

Dans la forme de réalisation illustrée par les figures 9 et 10, le contour interne de chaque galerie 12 est creusé d'un drageoir 22'.

Mais, en variante, il peut, comme précédemment, présenter en saillie un cordon 22, soit que ce cordon soit formé par une lamelle 24 distincte, figure 12, soit qu'il soit d'un seul tenant, figure 13, suivant des modalités décrites ci-dessus.

Quoi qu'il en soit, dans la forme de réalisation représentée, une telle galerie 12 présente localement, en positions globalement diamétralement opposées deux déformations 30, sensiblement en demi-onde, à la faveur de chacune desquelles sont formés deux trous 26 prévus pour passage de l'extrémité correspondante du lien de cerclage souple 13 concerné, en coopération avec un troisième trou 31 formé au raccordement d'une telle déformation 30 avec la partie courante de la galerie 12.

Dans ce cas, pour réception de chacune des déformations 30 d'une galerie 12, la rainure 27 de la structure maîtresse 10 dans laquelle celle-ci est engagée présente, en correspondance, un épanouissement 33, figure 11.

La mise en place du lien de cerclage souple 13 se fait suivant des modalités décrites ci-dessus.

Mais, avant engagement d'une extrémité de ce lien de cerclage souple 13 dans les trous 14 et 26 correspondants de la structure maîtresse 10 et de la galerie 12 concernée, cette extrémité est engagée de l'extérieur dans le troisième trou 31 de la galerie 12 associée dans ce cas aux trous précédents.

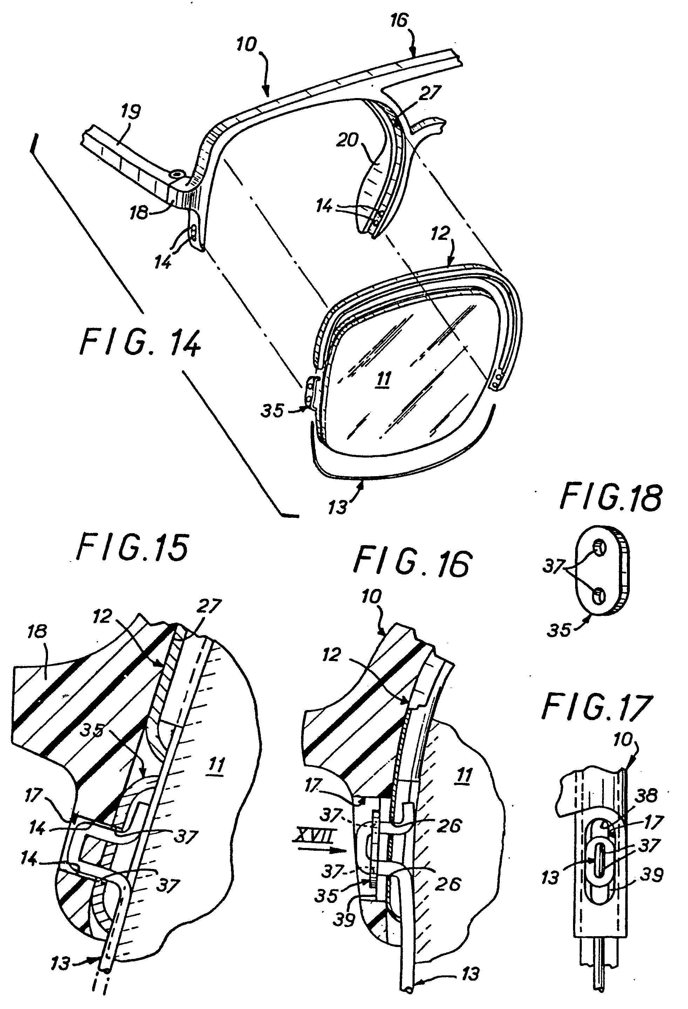

Dans les variantes de réalisation illustrées par les figures 14 à 23, il n'est prévu de trous en correspondance à la fois dans la structure maîtresse 10 et à la fois dans chacune des galeries 12 que pour l'une des extrémités du lien de cerclage souple 13 correspondant.

L'expérience montre en effet qu'une telle disposition suffit en effet en pratique à l'assujettissement recherché entre galerie et structure maîtresse pour la bonne rigidification de l'ensemble.

Par exemple, et tel que représenté, c'est côté nasal que chaque lien de cerclage souple 13 est conjointement passé dans deux trous 14 de la structure maîtresse 10 et dans deux trous 26 de la galerie 12 correspondante.

Dans les formes de réalisation illustrées par les figures 14 à 22, il est prévu, à l'autre extrémité d'un tel lien de cerclage souple 13, côté temporal, une plaquette d'ancrage 35, qui est séparée de la galerie 12 concernée, et qui, traversée par ledit lien de cerclage souple 13, coopère avec la structure maîtresse 10 pour la fixation de ladite autre extrémité de ce lien de cerclage souple 13.

En pratique, une telle plaquette d'ancrage 35 comporte deux trous 37, pour passage du lien de cerclage souple 13.

Par exemple, figures 14, 15, elle est disposée du côté interne de la structure maîtresse 10, c'est-à-dire du côté du verre 11 correspondant, dans la rainure 27 de ladite structure maîtresse 10, au droit du logement 17 de celle-ci ; elle est donc dans le prolongement de la galerie 12 concernée, dont l'extension est limitée à cet effet.

Dans l'exemple de réalisation représenté, elle présente un profil bombé, dont la concavité est dirigée vers le verre 11, et dont le fond prend appui sur celui de la rainure 27 de la structure maîtresse 10.

Ses trous 37 sont sensiblement en correspondance avec les trous 14 de la structure maîtresse 10.

Vis-à-vis des formes de réalisation précédentes, tout se passe donc comme si la plaquette d'ancrage 35 formait une partie détachée de la galerie 12.

Mais distincte de celle-ci, elle est mobile par rapport à la structure maîtresse 10.

De ce fait, l'assemblage de l'ensemble est particulièrement facile, les trous 37 de la plaquette d'ancrage 35 pouvant commodément être alignés avec ceux 14 de la structure maîtresse 10, sans avoir à intervenir sur la position de la galerie 12.

Comme précédemment, le lien de cerclage souple traverse d'abord un premier des trous 37 de la plaquette d'ancrage 35 puis, l'un après l'autre, les deux trous 14 de la structure maîtresse 10, et enfin le deuxième des trous 37 de la plaquette d'ancrage 35.

En variante, figures 16 à 18, la plaquette d'ancrage 35, qui est alors par exemple plate, tel que représenté, est disposée du côté externe de la structure maîtresse 10, c'est-à-dire à l'opposé du verre 11, et au droit d'une fente 38 de ladite structure maîtresse 10 de largeur inférieure à celle de la plaquette d'ancrage 35.

Dans l'exemple de réalisation représenté, la plaquette d'ancrage 35 est disposée dans le logement 17 que présente la structure maîtresse 10 du côté externe, la fente 38 est ménagée dans le fond 39 de ce logement 17, et celui-ci a une longueur supérieure à celle de la plaquette d'ancrage 35, en sorte que celle-ci, comme précédemment, est mobile par rapport à la structure maîtresse 10, parallèlement à la fente 38.

En regard de cette fente 38, la galerie 12 présente deux trous 26, comme dans les formes de réalisation illustrées par les figures 1 à 13, pour le passage de l'extrémité concernée du lien de cerclage souple 13, ledit lien de cerclage souple 13 traversant la fente 38 de la structure maîtresse 10 entre les trous 37 de la plaquette d'ancrage 35 et ceux 26 de ladite galerie 12.

Vis-à-vis de ces formes de réalisation précédentes, tout se passe donc comme si la plaquette d'ancrage 35 formait une partie détachée de la structure maîtresse 10, ses trous se substituant à ceux de celle-ci.

Mais, comme précédemment, sa mobilité facilite l'assemblage de l'ensemble.

En outre, sa présence à l'extérieur de la structure maîtresse 10 confère à celle-ci un aspect esthétique particulier.

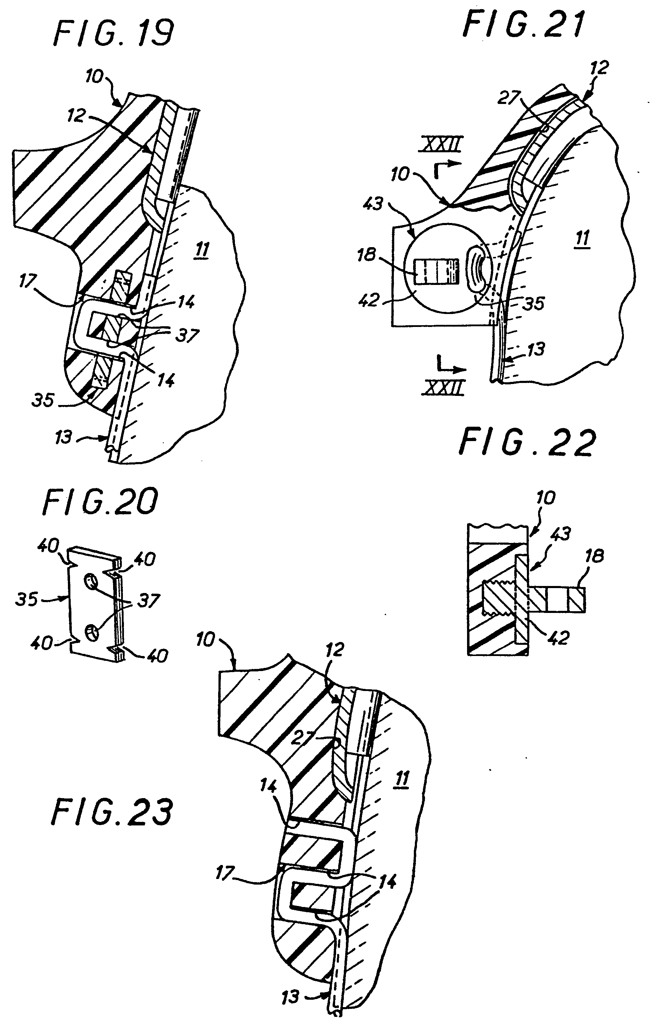

Dans les variantes de réalisation illustrées par les figures 19 à 22, dans lesquelles, comme c'est le cas préférentiel, la structure maîtresse 10 est en matière synthétique, la plaquette d'ancrage 35 est au moins pour partie disposée dans l'épaisseur d'une telle structure maîtresse 10.

Par exemple, figures 19, 20, s'agissant d'une structure maîtresse 10 réalisée par moulage, elle est noyée dans l'épaisseur de celle-ci lors même de ce moulage, par surmoulage.

Comme précédemment, elle est établie au droit du logement 17 correspondant de la structure maîtresse 10, avec ses trous 37 en correspondance avec ceux 14 de cette structure maîtresse.

Pour assurer son ancrage dans la masse de celle-ci, elle présente latéralement des encoches 40.

En variante, figures 21 et 22, la plaquette d'ancrage 35 est à la surface de la structure maîtresse 10 ; elle appartient à la semelle 42 d'un insert 43 portant d'un seul tenant, de manière connue en soi, le charnon 18 correspondant.

Ses trous 37 sont établis au droit d'évidements de la structure maîtresse 10 qui, débouchant du côté interne, sont propres au passage du lien de cerclage souple (non visibles sur les figures).

Dans la forme de réalisation illustrée par la figure 23, la structure maîtresse 10 présente, par exemple côté temporal, comme représenté, trois trous 14, sensiblement parallèles pour recevoir l'extrémité correspondante du lien de cerclage souple 13, et celle-ci passe dans ces trous en formant une double boucle ayant sensiblement un profil en S, ce qui en assure par un effet de chicane un blocage plus sûr qu'une simple boucle, notamment lorsque la structure maîtresse 10 est en matière synthétique.

De préférence, et tel que représenté, côté externe, à l'opposé du verre 11, deux de ces trous débouchent à l'extérieur dans un logement commun 17, ce qui permet au lien de cerclage souple 13 de ne pas faire saillie vers l'extérieur entre ces trous 14, et le troisième de celui-ci débouche directement sur la surface externe de la structure maîtresse 10, ce qui permet un cisaillement de l'extrémité libre du lien de cerclage souple 13 au ras de celle-ci.

Les deux galeries peuvent si désiré être reliées l'une à l'autre par un ou plusieurs pontets, et, dans ce cas, la structure maîtresse peut être réalisée en deux pièces, chacune formée individuellement d'une de ses anses.

En outre, ainsi qu'on l'aura compris, chaque galerie 12 ou éventuellement chacune des parties constitutives de celle-ci, peut être avantageusement formée d'un tronçon de profilé, découpé à la demande, et plié à la configuration désirée ; c'est la raison pour laquelle, sur les figures 9 à 13, la gorge 21 d'une telle galerie s'étend aussi bien sur la portion inférieure de cette galerie, où elle coopère avec le lien de cerclage souple 13 concerné, que sur sa portion supérieure, où elle n'a en pratique dans ce cas aucun rôle.

En variante, elle peut, dans cette portion-supérieure, coopérer en emboîtement avec un cordon prévu à cet effet en saillie sur la structure maîtresse, qui ne comporte dès lors plus nécessairement de rainure 27.

Quoi qu'il en soit, pour les raisons exposées ci-dessus, chaque galerie 12, ou, éventuellement, au moins la partie en gouttière 23 de celle-ci, est de préférence en métal.

Mais il peut s'agir également de matière synthétique, si cette matière synthétique est choisie de manière à présenter toute la rigidité souhaitable.

Quant à la structure maîtresse 10, elle est de préférence réalisée en matière synthétique, comme mentionné au sujet des formes de réalisation illustrées par les figures 21, 22 et 23, et cette matière synthétique est de préférence choisie pour présenter une certaine souplesse.

Mais, en variante, elle peut aussi être réalisée en métal ou alliage léger si désiré.

## Revendications

1. Monture de lunettes du genre comportant une structure maîtresse (10) et, portés par celle-ci, deux entourages ou cercles propres chacun à recevoir un verre de lunettes (11), chacun desdits entourages ou cercles comportant d'une part une galerie (12) propre à coopérer en emboîtement avec un verre de lunettes (11), et d'autre part un lien de cerclage souple (13) propre à être attelé à la structure maîtresse (10) à chacune de ses extrémités par passage dans deux trous liés à celle-ci, caractérisée en ce que, pour l'une au moins des extrémités du lien de cerclage souple (13), quatre trous sont prévus en combinaison, deux (14) formés de manière individuellement connue en soi sur la structure maîtresse (10) et deux (26) formés également de manière individuellement connue en soi sur la galerie (12) concernée, lesdits trous (14, 26) étant en correspondance deux à deux de ladite structure maîtresse (10) à ladite galerie (12), en sorte que ledit lien de cerclage souple (13) assujettit la galerie (12) à la structure maîtresse (10).

2. Monture de lunettes suivant la revendication 1, caractérisée en ce qu'il y a deux trous (14) sur la structure maîtresse (10) et deux trous (26) sur la galerie (12) pour chaque extrémité du lien de cerclage souple (13).

3. Monture de lunettes suivant la revendication 2, dans laquelle chaque galerie (12) s'étend sensiblement en cercle, caractérisée en ce qu'une telle galerie (12) présente localement, en positions globalement diamétralement opposées, deux déformations sensiblement en demi-onde (30), à la faveur de chacune desquelles sont formés les deux trous (26) prévus pour passage de l'extrémité correspondante du lien de cerclage souple (13) concerné, en coopération avec un troisième trou (31) formé au raccordement d'une telle déformation (30) avec la partie courante d'une telle galerie (12).

4. Monture de lunettes suivant la revendication 1, caractérisée en ce que, à l'autre extrémité du lien de cerclage souple (13), il est prévu une plaquette d'ancrage (35), qui est séparée de la galerie (12), et qui, traversée par le lien de cerclage souple (13), coopère avec la structure maîtresse (10) pour la fixation de ladite autre extrémité dudit lien de cerclage souple (13).

5. Monture de lunettes suivant la revendication 4, caractérisée en ce que, pour le passage du lien de cerclage souple (13), ladite plaquette d'ancrage (35) comporte deux trous (37).

6. Monture de lunettes suivant la revendication 5, caractérisée en ce que la plaquette d'ancrage (35) est disposée du côté interne de la structure maîtresse (10), dans le prolongement de la galerie (12), et ses trous (37) coïncident sensiblement avec ceux (14) de ladite structure maîtresse (10).

7. Monture de lunettes suivant la revendication 6, caractérisée en ce que la plaquette d'ancrage (35) présente un profil bombé et sa concavité est dirigée vers le verre de lunettes (11).

8. Monture de lunettes suivant la revendication 4, caractérisée en ce que la plaquette d'ancrage (35) est disposée du côté externe de la structure maîtresse (10), au droit d'une fente (38) de celle-ci de largeur inférieure à celle de la plaquette d'ancrage (35), la galerie (12) comporte deux trous (26) en regard de ladite fente (38), et le lien de cerclage souple (13) traverse celle-ci entre les trous (37) de la plaquette d'ancrage (35) et ceux (26) de la galerie (12).

9. Monture de lunettes suivant l'une quelconque des revendications 6, 8, caractérisée en ce que la plaquette d'ancrage (35) est mobile par rapport à la structure maîtresse (10).

10. Monture de lunettes suivant la revendication 5, caractérisée en ce que la plaquette d'ancrage (35) est au moins pour partie disposée dans l'épaisseur de la structure maîtresse (10).

11. Monture de lunettes suivant la revendication 10, caractérisée en ce que la plaquette d'ancrage (35) est noyée dans l'épaisseur de la structure maîtresse (10).

12. Monture de lunettes suivant la revendication 10, caractérisée en ce que la plaquette d'ancrage (35) appartient à la semelle (42) d'un insert (43) portant un charnon (18).

13. Monture de lunettes suivant la revendication 1, caractérisée en ce que, à l'autre extrémité du lien de cerclage souple (13) la structure maîtresse (10) présente trois trous (14), sensiblement parallèles, pour recevoir ladite autre extrémité du lien de cerclage souple (13), et celle-ci forme une boucle ayant sensiblement un profil en S.

14. Monture de lunettes suivant la revendication 13, dans laquelle, côté externe, à l'opposé du verre de lunettes (12), deux des trous (14) de la structure maîtresse (10) débouchent à l'extérieur dans un logement en retrait (17) commun, caractérisée en ce que le troisième des trous (14) de ladite structure maîtresse (10) débouche directement à la surface externe de celle-ci, ce qui permet un cisaillement de l'extrémité du lien de cerclage souple (13) au ras de la structure maîtresse (10).

15. Monture de lunettes suivant l'une quelconque des revendications 1 à 14, dans laquelle des moyens d'emboîtement sont prévus entre chaque galerie (12) et la structure maîtresse (10), caractérisée en ce que lesdits moyens d'emboîtement comportent une rainure (27) pratiquée dans la structure maîtresse (10) pour engagement au moins partiel de la galerie (12).

16. Monture de lunettes suivant la revendication 15, caractérisée en ce que, transversalement, chaque galerie (12) est recouverte en totalité par la structure maîtresse (10).

17. Monture de lunettes suivant la revendication 16, dans laquelle chaque galerie (12) n'a qu'une extension limitée, caractérisée en ce que, longitudinalement, une telle galerie (12) est également recouverte en totalité par la structure maîtresse (10).

18. Monture de lunettes suivant l'une quelconque des revendications 1 à 17, et de composition dite combinée, partie en métal, partie en matière synthétique, caractérisée en ce que c'est la structure maîtresse qui est en matière synthétique, tandis que les galeries sont en métal.

## Claims

1. Spectacle frame of the kind comprising a main structure (10) and, carried by the latter, two surrounds or rims which are each suitable for receiving a spectacle lens (11), each of the said surrounds or rims comprising on the one hand, a track (12) suitable for interfitting cooperation with a spectacle lens (11), and, on the other hand, a flexible rim tie (13) suitable for being fixed to the main structure (10) at each of its ends, by passing through two holes associated with the said main structure, characterized in that, for at least one of the ends of the flexible rim tie (13), four holes are provided in combination, two (14) being formed in the main structure (10) in a manner which is individually in itself known, and two (26) being formed in the track (12) in question, also in a manner which is individually in itself known, the said holes (14, 26) being in register in pairs from the said main structure (10) to the said track (12), so that the said flexible rim tie (13) fastens the track (12) to the main structure (10).

2. Spectacle frame according to claim 1, characterized in that there are two holes (14) in the main structure (10) and two holes (26) in the track (12) for each end of the flexible rim tie (13).

3. Spectacle frame according to claim 2, in which each track (12) extends approximately in a circle, characterized in that the track (12) locally has, in substantially diametrically opposite positions, two substantially half-wave deformations (30), on each of these deformations being formed the two holes (26) provided for the passage of the corresponding end of the flexible rim tie (13) in question, in cooperation with a third hole (31) formed at the connection between this deformation (30) and the running part of the track (12).

4. Spectacle frame according to claim 1, characterized in that an anchor plate (35) is provided at the other end of the flexible rim tie (13), which anchoring plate is separated from the track (12) and, with the flexible rim tie (13) passing therethrough, cooperates with the main structure (10) for fixing the said other end of the said flexible rim tie (13).

5. Spectacle frame according to claim 4, characterized in that the said anchor plate (35) has two holes (37) for the passage of the flexible rim tie (13).

6. Spectacle frame according to claim 5, characterized in that the anchor plate (35) is arranged on the inside of the main structure (10), as a continuation of the track (12), and its holes (37) approximately coincide with the holes (14) in the said main structure (10).

7. Spectacle frame according to claim 6, characterized in that the anchor plate (35) has a curved profile and its concavity is directed towards the spectacle lens (11).

8. Spectacle frame according to claim 4, characterized in that the anchor plate (35) is arranged on the outside of the main structure (10) in line with a slot (38) in the latter, the width of the said slot being less than that of the anchor plate (35), the track (12) has two holes (26) opposite the said slot (38), and the flexible rim tie (13) passes through the latter between the holes (37) in the anchor plate (35) and the holes (26) in the track (12).

9. Spectacle frame according to claim 6 or 8, characterized in that the anchor plate (35) is movable relative to the main structure (10).

10. Spectacle frame according to claim 5, characterized in that at least part of the anchor plate (35) is arranged in the thickness of the main structure (10).

11. Spectacle frame according to claim 10, characterized in that the anchor plate (35) is embedded in the thickness of the main structure (10).

12. Spectacle frame according to claim 10, characterized in that the anchor plate (35) forms part of the baseplate (42) of an insert (43) carrying a knuckle (18).

13. Spectacle frame according to claim 1, characterized in that, at the other end of the flexible rim tie (13), the main structure (10) has three approximately parallel holes (14) for receiving the said other end of the flexible rim tie (13), and this end forms a loop having an approximately S-shaped profile.

14. Spectacle frame according to claim 13, in which, on the outside, opposite the spectacle lens (12), two of the holes (14) in the main structure (10) open, to the exterior, in a common recessed housing (17), characterized in that the third hole (14) in the said main structure (10) opens directly on the outer surface of the latter, thereby enabling the cutting-off of the end of the flexible rim tie (13), level with the main structure (10).

15. Spectacle frame according to any one of claim 1 to 14, in which interfitting means are provided between each track (12) and the main structure (10), characterized in that the said interfitting means comprise a groove (27) provided in the main structure (10) for at least partial engagement of the track (12).

16. Spectacle frame according to claim 15, characterized in that, transversely, each track (12) is totally covered by the main structure (10).

17. Spectacle frame according to claim 16, in which each track (12) has only a limited extension, characterized in that, longitudinally, this track (12) is also totally covered by the main structure (10).

18. Spectacle frame according to any one of claims 1 to 17, having a so-called combined composition whereby it is partly made of metal and partly made of synthetic material, characterized in that it is the main structure which is made of synthetic material, whilst the tracks are made of metal.

**Ansprüche**

1. Brillengestell mit einem Hauptsteg (10) und zwei von diesem getragenen Einfassungen oder Ringen zur Aufnahme jeweils eines Brillenglases (11), wobei jede der Einfassungen oder Ringe einerseits aus einer Rahmenleiste (12) besteht, in welche ein Brillenglas (11) eingefügt ist, und andererseits aus einem elastischen Umreifungsband (13), welches an dem Hauptsteg (10) mit jedem seiner Enden angehängt ist, indem diese Enden durch zwei in den Rahmenleisten ausgebildeten Löchern hindurchgeführt sind, dadurch gekennzeichnet, daß für wenigstens eines der Enden des elastischen Umreifungsbandes (13) vier zusammenwirkende Löcher vorgesehen sind, daß zwei Löcher (14), für sich gesehen wie an sich bekannt, in dem Hauptsteg (10) und zwei Löcher (26), für sich gesehen an sich bekannt, in der betreffenden Rahmenleiste (12) ausgebildet sind, und daß von den Löchern (14, 26) jeweils zwei Löcher des Hauptstegs (10) zwei Löchern in der Rahmenleiste (12) zugeordnet sind, so daß das elastische Umreifungsband (13) die Rahmenleiste (12) an dem Hauptsteg (10) befestigt.

2. Brillengestell nach Anspruch 1, dadurch gekennzeichnet, daß für jedes der Enden des elastischen Umreifungsbandes (13) zwei Löcher (14) in dem Hauptsteg (10) und zwei Löcher (26) in der Rahmenleiste (12) vorgesehen sind.

3. Brillengestell nach Anspruch 2, bei welchem jede Rahmenleiste (12) im wesentlich kreisförmig ist, dadurch gekennzeichnet, daß eine solche Rahmenleiste (12) örtlich in im wesentlichen diametral gegenüberliegenden Lagen zwei etwa halb-wellenförmige Ausformungen (30) aufweist, an denen vorzugsweise die zwei Löcher (26) vorgesehen sind zum Durchgang des entsprechenden Endes des elastischen Umreifungsbandes (13), welche zusammenwirken mit einem dritten Loch (31), welches an der Übergangsstelle einer Ausformung (30) mit dem übrigen Teil einer Rahmenleiste (12) ausgebildet ist.

4. Brillengestell nach Anspruch 1, dadurch gekennzeichnet, daß am anderen Ende des elastischen Umreifungsbandes (13) ein Verankerungsplättchen (35) vorgesehen ist, welches von der Rahmenleiste (12) getrennt ist und welches von dem elastischen Umreifungsband (13) durchquert wird und mit dem Hauptsteg (10) zusammenwirkt zur Befestigung des anderen Endes des elastischen Umreifungsbandes (13).

5. Brillengestell nach Anspruch 4, dadurch gekennzeichnet, daß das Verankerungsplättchen (35) für den Durchgang des elastischen Umreifungsbandes (13) zwei Löcher (37) aufweist.

6. Brillengestell nach Anspruch 5, dadurch gekennzeichnet, daß das Verankerungsplättchen (35) an der Innenseite des Hauptsteges (10) in Verlängerung der Rahmenleiste (12) angeordnet ist und daß die Löcher (37) genau mit den Löchern (14) des Hauptsteges (10) zusammenfallen.

7. Brillengestell nach Anspruch 6, dadurch gekennzeichnet, daß das Verankerungsplättchen (35) ein ausgebauchtes Profil aufweist und daß die konkave Profilseite gegen das Brillenglas (11) gerichtet ist.

8. Brillengestell nach Anspruch 4, dadurch gekennzeichnet, daß das Verankerungsplättchen (35) an der Außenseite des Hauptsteges (10) in einer Ausnehmung (38) angeordnet ist, welche eine innere Weite aufweist, die der Größe des Ankerplättchens (35) entspricht, daß die Rahmenleiste (12) im Vergleich zur Ausnehmung (38) zwei Löcher (26) aufweist und daß das elastische Umreifungsband (13) die Ausnehmung zwischen den Löchern (37) des Verankerungsplättchens (35) und den Löchern (26) der Rahmenleiste (12) durchquert.

9. Brillengestell nach einem der Ansprüche 6 oder 8, dadurch gekennzeichnet, daß das Verankerungsplättchen (35) beweglich hinsichtlich des Hauptsteges (10) ist.

10. Brillengestell nach Anspruch 5, dadurch gekennzeichnet, daß das Verankerungsplättchen (35) wenigstens mit einem Teil in der Dicke des Hauptsteges (10) angeordnet ist.

11. Brillengestell nach Anspruch 10, dadurch gekennzeichnet, daß das Verankerungsplättchen (35) in der Dicke des Hauptsteges (10) eingebettet ist.

12. Brillengestell nach Anspruch 10, dadurch gekennzeichnet, daß das Verankerungsplättchen (35) eine Fußplatte (42) eines Einsatzteils (43) ist, an welcher ein Scharnier (18) vorgesehen ist.

13. Brillengestell nach Anspruch 1, dadurch gekennzeichnet, daß der Hauptsteg (10) für das andere Ende des elastischen Umreifungsbandes (13) drei genau parallele Löcher (14) aufweist zur Aufnahme des anderen Endes des elastischen Umreifungsbandes (13), und daß das Umreifungsband eine Schleife bildet, welche genau ein S-Profil darstellt.

14. Brillengestell nach Anspruch 13, bei welchem an der Außenseite gegenüber den Brillengläsern (12) zwei Löcher (14) des Hauptsteges (10) auf der Außenseite in einer gemeinsamen vertieften Ausnehmung (17) münden, dadurch gekennzeichnet, daß das dritte der Löcher (14) des Hauptsteges (10) unmittelbar an der Außenseite des Hauptsteges mündet, wodurch ein Abschneiden des Endes des elastischen Umreifungsbandes (13) bündig an dem Hauptträger (10) möglich ist.

15. Brillengestell nach einem der Ansprüche 1 bis 14, bei welchem Mittel zum Einlassen vorgesehen sind zwischen jeder Rahmenleiste (12) und dem Hauptsteg (10), dadurch gekennzeichnet, daß die Mittel zum Einlassen aus einer Nut (27) bestehen, welche in dem Hauptsteg (10) ausgebildet ist für den Eingriff wenigstens eines Bereichs der Rahmenleiste (12).

16. Brillengestell nach Anspruch 15, dadurch gekennzeichnet, daß jede Rahmenleiste (12) im Querschnitt völlig von dem Hauptsteg (10) überdeckt ist.

17. Brillengestell nach Anspruch 16, bei welchem jede Rahmenleiste (12) nur eine begrenzte Ausdehnung aufweist, dadurch gekennzeichnet, daß eine solche Rahmenleiste (12) auch der Länge nach völlig von dem Hauptsteg (10) überdeckt wird.

18. Brillengestell nach einem der Ansprüche 1 bis 17 und mit einer kombinierten Zusammensetzung teilweise aus Metall, teilweise aus Kunststoffmaterial, dadurch gekennzeichnet, daß der Hauptsteg aus Kunststoff ist, während die Rahmenleisten aus Metall bestehen.

0 027 415

FIG.1 · FIG.2 · FIG.3 · FIG.4 · FIG.5 · FIG.6 · FIG.7 · FIG.8 · FIG.9 · FIG.10 · FIG.11 · FIG.12 · FIG.13

FIG. 14

FIG.15

FIG. 16

FIG.18

FIG.17

0 027 415

FIG. 19

FIG. 21

FIG.20

FIG. 22

FIG.23

3